# EUROPEAN PATENT SPECIFICATION

(11) **EP 4 173 349 B1**
(45) Date of publication and mention of the grant of the patent: **02.10.2024**
(21) Application number: 20948778.4
(22) Date of filing: 03.08.2020
(51) Int. Cl.: H04W 24/10, H04W 48/04

(54) **TECHNIQUES FOR PERFORMING MINIMIZATION OF DRIVE TEST**
VERFAHREN ZUR MINIMIERUNG VON ANTRIEBSTESTS
TECHNIQUES POUR EFFECTUER UNE MINIMISATION D'ESSAI EN MOUVEMENT

(43) Date of publication of application: 03.05.2023
(73) Proprietor: ZTE Corporation, Shenzhen, Guangdong 518057 (CN)
(72) Inventor: LI, Wenting, Shenzhen, Guangdong 518057 (CN); FANG, Jianmin, Shenzhen, Guangdong 518057 (CN); QIU, Zhihong, Shenzhen, Guangdong 518057 (CN)
(74) Representative: Vossius & Partner Patentanwälte Rechtsanwälte mbB
(86) International application number: PCT/CN2020/106536
(87) International publication number: WO 2022/027167

(56) References cited:
- CN-A- 103 813 379
- CN-A- 110 381 526
- US-B1- 10 716 021
- US-B2- 9 888 403
- "3rd Generation Partnership Project; Technical Specification Group Services and System Aspects; Study on management of non-public networks; (Release 16)", 12 June 2020 (2020-06-12), XP051897666, Retrieved from the Internet <URL:https://ftp.3gpp.org/tsg_sa/WG5_TM/TSGS5_131e/Docs/S5-203320.zip28807-120.docx> [retrieved on 20200612]
- ERICSSON: "Connected mode aspects", 3GPP DRAFT; R2-1914627, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20191118 - 20191122, 7 November 2019 (2019-11-07), Mobile Competence Centre ; 650, route des Lucioles ; F-06921 Sophia-Antipolis Cedex ; France , XP051815688
- CHAIRMAN: "Agenda", 3GPP DRAFT; R3-203000, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Online; 20200601 - 20200611, 22 May 2020 (2020-05-22), Mobile Competence Centre ; 650, route des Lucioles ; F-06921 Sophia-Antipolis Cedex ; France , XP051889035
- CATT: "Open Issues for Cell Selection and Reselection of NPN cell", 3GPP DRAFT; R2-1914439, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20191118 - 20191122, 8 November 2019 (2019-11-08), Mobile Competence Centre ; 650, route des Lucioles ; F-06921 Sophia-Antipolis Cedex ; France , XP051816521

## Description

### TECHNICAL FIELD

This disclosure is directed generally to digital wireless communications.

### BACKGROUND

Mobile telecommunication technologies are moving the world toward an increasingly connected and networked society. In comparison with the existing wireless networks, next generation systems and wireless communication techniques will need to support a much wider range of use-case characteristics and provide a more complex and sophisticated range of access requirements and flexibilities.

Long-Term Evolution (LTE) is a standard for wireless communication for mobile devices and data terminals developed by 3rd Generation Partnership Project (3GPP). LTE Advanced (LTE-A) is a wireless communication standard that enhances the LTE standard. The 5th generation of wireless system, known as 5G, advances the LTE and LTE-A wireless standards and is committed to supporting higher data-rates, large number of connections, ultralow latency, high reliability and other emerging business needs.

### SUMMARY

Techniques are disclosed for techniques for performing minimization of drive test (MDT) and for operating self-organizing networks (SON) for the non-public network (NPN), such as for stand-alone non-public network (SNPN), which can be deployed by private operators and which may share the same frequency with the public network. An example can be found in XP051897666 "3rd Generation Partnership Project; Technical Specification Group Services and System Aspect; Study on management of non-public networks (Release 16)" 12 June 2020.

An example embodiment for providing membership information of network cells includes receiving, by a user equipment, a first message that indicates to the user equipment to log and provide a membership information of one or more neighbor cells, where the user equipment is camped on a cell other than the one or more neighbor cells, where the membership information indicates whether a first set of network identifiers (IDs) of the one or more neighbor cells belongs to a second set of network IDs of a registered network or a selected network, and where the user equipment is configured to connect to the registered network or the selected network; and sending a second message that includes the membership information of the one or more neighbor cells detected by the user equipment.

In some embodiments, the membership information of the one or more neighbor cells is determined by the user equipment by comparing the second set of network IDs with the first set of network IDs broadcasted in a system information. In some embodiments, the second set of network IDs are provided by an upper layer of the user equipment. In some embodiments, the second set of network IDs include a stand-alone non-public network (SNPN) ID that equals to a public land mobile network (PLMN) plus a network ID. In some embodiments, the second set of network IDs include a public land mobile network (PLMN) ID. In some embodiments, the second set of network IDs include a public network integrated non-public network (PNI-NPN) ID that equals to the PLMN plus a closed access group (CAG) ID.

In some embodiments, upon the receiving the first message, the method further comprises: storing, in a first local variable in the user equipment, a configuration that indicates that the membership information is requested; performing a logging operation after the membership information of the one or more neighbor cells are obtained, where the logging operation includes storing the membership information in a second local variable in the user equipment; sending a third message that indicates that the membership information is available; and where the second message is sent in response to receiving a fourth message by the user equipment that triggers the user equipment to report the membership information. In some embodiments, the third message includes a radio resource control (RRC) reconfiguration complete message, a RRC setup complete message, a RRC resume complete message, or a RRC re-establishment complete message.

In some embodiments, the membership information in the second message includes a physical cell identifier (PCI) of the at least one neighbor cell, a measurement quality result of the at least one neighbor cell, a number of synchronization signal blocks (SSB) received from the at least one neighbor cell, or the membership indicator of the at least one neighbor cell. In some embodiments, the second message includes a physical cell identifier (PCI) of the at least one neighbor cell. In some embodiments, the first message includes one or more physical cell identifier (PCI) ranges, and the second message includes the membership information of the one or more neighbor cells having one or more frequencies that are within the one or more PCI ranges. In some embodiments, each of the one or more PCI ranges is associated with an absolute radio frequency channel number (ARFCN). In some embodiments, each of the one or more PCI ranges is associated with a first set of one or more frequencies.

In some embodiments, the first set of one or more frequencies includes any one or more of an infra frequency and an inter frequency. In some embodiments, the first message is included in a system information block (SIB) or a dedicated radio resource control (RRC) message.

An example embodiment for performing a minimization of drive test (MDT) includes receiving, by a user equipment, a message that restricts an area for the user equipment to perform a minimization drive test (MDT), where the user equipment is configured to operated on a non-public network (NPN), and where the message includes: one or more stand-alone non-public network (SNPN) identifiers that equal to a public land mobile network (PLMN) identifier plus a network identifier, a closed access group (CAG) list which includes one or more PLMN identifiers associated with the CAG list, a CAG only indicator that indicates that the user equipment is requested to perform the MDT for only a set of CAGs identified by the CAG list, and a CAG except indicator that indicates that the user equipment is requested to perform the MDT for all cells including public cells and CAG cells except the set of CAG cells identified by the CAG list; and performing a measurement for the MDT based on the message.

In some embodiments, the user equipment is registered under a SNPN network or the user equipment is registered under a PNI-NPN network. In some embodiments, for a PLMN and for the user equipment registered under the PNI-NPN network: the user equipment belongs to a first type of PNI-NPN user equipment in which the user equipment is only allowed to camp under a CAG cell, or the user equipment belongs to a second type of PNI-NPN user equipment in which the user equipment is allowed to camp under the CAG cell and a public cell. In some embodiments, the one or more SNPN identifiers are used by the user equipment registered under a SNPN network to restrict the area in which the UE performs the measurement for the MDT. In some embodiments, where the CAG list, the CAG only indicator, or the CAG except indicator is used by the user equipment registered under a PNI-NPN network to restrict the area in which the UE performs the measurement for the MDT.

In some embodiments, the user equipment belongs to a first type of PNI-NPN user equipment in which the user equipment is only allowed to camp under a CAG cell, and for a PLMN and for the first type of PNI-NPN UE, the UE performs the measurement for the MDT only in one or more cells broadcasting one of CAG ID that included in the CAG list. In some embodiments, the user equipment belongs to a second type of PNI-NPN user equipment in which the user equipment is allowed to camp under the CAG cell and a public cell, and, for a PLMN, for the second type of PNI-NPN UE, the CAG only indicator indicate that the UE is to perform the measurement for the MDT only in the one or more cells broadcasting one of CAG ID that included in the CAG list.

In some embodiments, the method further comprises, upon determining that the CAG only indication is absent for the PLMN and for the second type of PNI-NPN UE, the UE performs the measurement for the MDT in the one or more cells broadcasting one of CAG ID that included in the CAG list and the public cells under the PLMN. In some embodiments, the user equipment belongs to a second type of PNI-NPN user equipment in which the user equipment is allowed to camp under the CAG cell and a public cell, and for a PLMN and for the second type of PNI-NPN UE, the CAG except indicator indicates that the UE is to perform the measurement for the MDT for all cells including public cells and CAG cells except the set of CAG cells identified by the CAG list. In some embodiments, the user equipment belongs to a first type of PNI-NPN user equipment in which the user equipment is only allowed to camp under a CAG cell, and for a PLMN and for the first type of PNI-NPN UE, the CAG except indicator indicates that the UE is to perform the measurement for the MDT for all cells including in the allowed CAG cells configured by the upper layer except the set of CAG cells identified by the CAG list.

In some embodiments, the message includes a cell global identifier list, a tracking area code list, and a tracking area identity list. In some embodiments, the message is received via a dedicated radio resource control (RRC) signal or a broadcast RRC signal.

An example embodiment for identifying a cause for an any cell selection state includes performing a first determination, by a user equipment, that all available frequencies are barred due to one or more cells that operate on the all available frequencies have a highest ranked or best signal quality and the one or more cells do not belong to a registered network or a selected network; performing, in response to the first determination, a second determination to enter an any cell selection state in which the user equipment is configured to perform cell selection to find a cell on which to camp; and logging an information that includes an identified cause for the any cell selection state. In some embodiments, the identified cause for the any cell selection state indicates a bar cause that indicates that the user equipment has entered in the any cell selection state in which the user equipment is barred from accessing the available frequencies. In some embodiments, the identified cause for the any cell selection state indicates a weak signal that indicates that the user equipment is out of coverage. In some embodiments, the identified cause for the any cell selection state indicates that the user equipment is barred from accessing the frequencies for a non-access stratum reason.

In yet another exemplary aspect, the above-described methods are embodied in the form of processor-executable code and stored in a non-transitory computer-readable storage medium. The code included in the computer readable storage medium when executed by a processor, causes the processor to implement the methods described in this patent document.

In yet another exemplary embodiment, a device that is configured or operable to perform the above-described methods is disclosed.

The above and other aspects and their implementations are described in greater detail in the drawings, the descriptions, and the claims.

### BRIEF DESCRIPTION OF THE DRAWING

FIG. 1 shows an example scenario of a user equipment (UE) located at an edge of two cells.
FIG. 2 shows a reporting structure for reporting for neighbor cells the measurement results obtained by performing minimization of drive test (MDT).
FIG. 3 shows an example scenario of indicate different PCI range for different frequencies.
FIG. 4 shows a structure of an area configuration in which the network configures one or more areas for the UE to perform MDT.
FIG. 5A shows an exemplary flowchart of a method for providing membership information of network cells.
FIG. 5B shows an exemplary flowchart of a method for performing a minimization of drive test (MDT).
FIG. 5C shows an exemplary flowchart of a method for identifying a cause for an any cell selection state.
FIG. 6 shows an exemplary block diagram of a hardware platform that may be a part of a network node or a user equipment.

### DETAILED DESCRIPTION

Rel-16 of the 3GPP standard describes two private network types: stand-alone non-public network (SNPN) and public network integrated non-public network (PNI-NPN). For the PNI-NPN, the concept of closed access group (CAG) was proposed for Access Stratum (AS) access control. Meanwhile, minimization of drive test (MDT) and self-organizing networks (SON) have been described for public network. However, for the non-public network (NPN), MDT can also be very useful and can present different issues than those for the MDT under the public network. For example, the differences between the MDT for public network as opposed to for NPN can include issues such as how to select physical cell identifier (PCI) for the SNPN network, how to configure the MDT area, and so on.

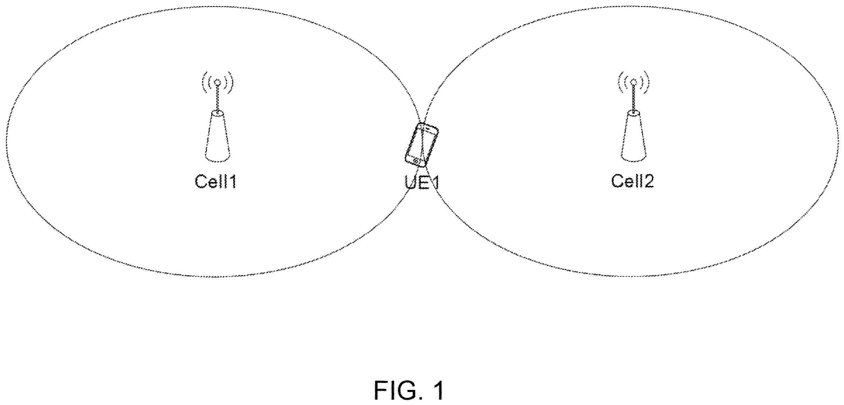

For the public network, different operators may deploy the networks on the different frequency. But for the NPN, if there is no NPN-specific frequency, there would be impact between the public network and NPN. These impacts can be considered at a deployment stage. For example, how to select the PCI range for a certain NPN network can be considered. A CAG network knows the neighbor cell information of the public network if the CAG network and the public network are deployed by the same operator. But when the SNPN selects a PCI range, the SNPN does not know any PCI information of the neighbor CAG or public cells. In at least this situation, the SNPN network can employ techniques to avoid PCI confusion or conflict. A gNB can detect the synchronization signals (e.g., primary synchronization signal and secondary synchronization signal) of the neighbor cells, where the gNB can get the PCI of the neighbor cells from the synchronization signals. However, there may be some scenarios, such as shown in FIG. 1, where cell1 cannot detect the cell2's PCI. However, in FIG. 1, a UE may detect cell1 and cell2 with the same PCI but from different operator. Thus, when determining the PCI range for a cell, such kinds of issues should be avoided.

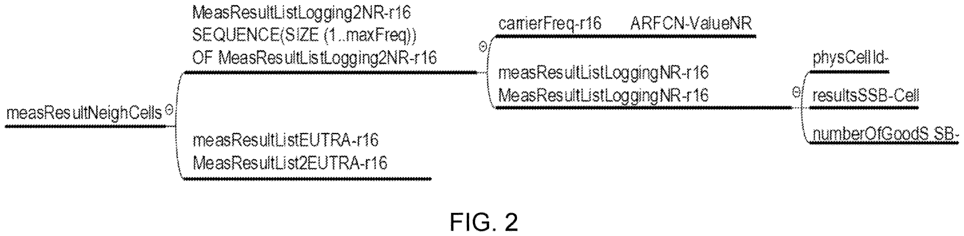

In the current network, such kinds of technical problems can be solved by adopting the following two methods that may be used together: (1) Avoid the use the same PCI for the neighbor cells at the deployment stage; and (2) Request the UE to report cell global identity (CGI) at connected state. However, as mentioned above, the method (1) cannot easily be adopted for the SNPN because of the different operators. Thus, some enhancement can describe techniques to assist PCI range selection at least for the SNPN network. According to the current MDT structure, for the neighbor cells, the neighbor cell information is reported by the UE as shown in FIG. 2.

As shown in the reporting structure of FIG. 2, the network that receives the neighbor cells' information cannot determine whether the reported cells are from the different operators at least because different operators can deploy different SNPNs with the same (or overlapping) PCI range so that, for example, a first SNPN may not know if a PCI belongs to the first SNPN or to a second SNPN. Thus, some enhancement can describe techniques to add to the MDT function to assist PCI range selection.

The example headings for the various sections below are used to facilitate the understanding of the disclosed subject matter and do not limit the scope of the claimed subject matter in any way. Accordingly, one or more features of one example section can be combined with one or more features of another example section. Furthermore, 5G terminology is used for the sake of clarity of explanation, but the techniques disclosed in the present document are not limited to 5G technology only, and may be used in wireless systems that implemented other protocols.

### I. Technical solutions for PCI range selection:

In an example technical solution, the UE can report the membership information to the network. For example, during the reselection, when the UE determines that the highest ranked cell is not a member cell, the UE can log this event and related information. The UE may determine the highest ranked or best cell by determining one or more metrics (e.g., RSRP, RSRQ, etc.,) associated with a quality of signal from one or more cells, where the highest ranked or best cell has a metric that indicates a highest (or best) quality of signal. An SNPN can be identified by a combination of a PLMN identifier (ID) and a Network ID (NID). The UE can determine that the highest ranked or best cell is not a member cell upon determining that the network identity (e.g. SNPN ID or PLMN ID) of the highest ranked or best cell is not the registered SNPN or the Selected SNPN. The registered SNPN or the selected SNPN may include an SNPN on which the UE is allowed to camp or to which the UE can be connected.

### Solution 1:

The UE can report the membership information to the network to indicate whether the detected PCI belong to a registered SNPN (RSNPN) or the selected SNPN network. A UE determines whether this cell belongs to a RSNPN or a selected SNPN network by determining whether an identifier (e.g., network ID) for the RSNPN or a selected SNPN was included in the system information. The UE can check the broadcasted network IDs in the system information, and if the identifier of the RSNPN and the selected SNPN (which may be provided by an upper layer) is included in the system information, then the RSNPN or the selected SNPN cell is a member cell, otherwise, it is not a member cell.

Generally, the SNPN cell can collect the PCI information of the neighbor cells, and the UE can report PCI information of neighbor cells. Then to avoid unnecessary reporting, the reserved PCI range can be indicated by the SNPN cell to the UE in the loggedMeasConfig message sent to the UE. The loggedMeasConfig message may include, for example, a PCI range per absolute radio frequency channel number (ARFCN). At UE side, the UE can report the membership information of one or more cells upon determining that the PCI of the one or more cells is included in the PCI range indicated by the loggedMeasConfig message. The membership information may indicate whether one or more neighbor cells are member cells (e.g., whether the identifier of the RSNPN or the selected SNPN was included in the system information).

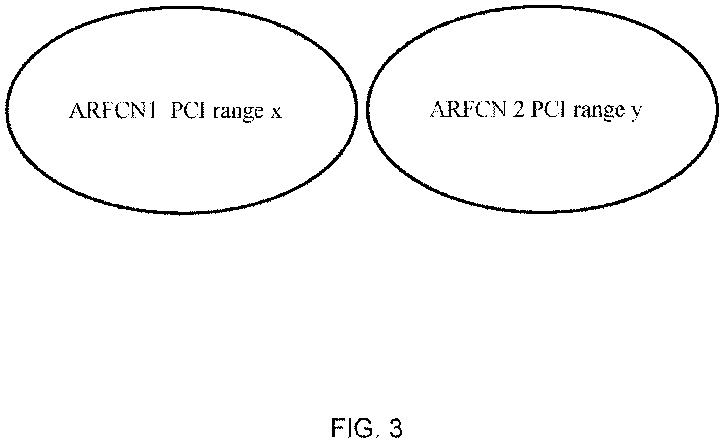

In an example embodiment, as shown in FIG. 3, the UE can report the cell information with the PCI of one or more cells belonging to the PCI range x on ARFCN1 , while report the cell information with the PCI of one or more cells belonging to the PCI range y on ARFCN2. The UE can perform both inter frequency and intra frequency cell measurements and reporting. For each of the one or more cells, the cell information may include, the PCI of a cell, the measured quality result of the cell, the number of good SSBs, and membership information of the cell. The PCI range x and PCI range y may be indicated in the loggedMeasConfig message.

### Solution 1.1:

To avoid unnecessary reporting, the reserved PCI range (e.g., PCI range per frequency) for an area can be indicated in the loggedMeasConfig by a cell to the UE. Then at UE side, the UE can report the membership information for the PCI that included in the PCI range. The frequency could be intra and/or inter frequency.

On the other hand, the SNPN may also have impact on the CAG or public land mobile network (PLMN). For example, a SNPN may be deployed on a same frequency as a public network/PNI-NPN network, or the public network/PNI-NPN network may be deployed on the same frequency as the SNPN at last because that the public network and the SNPN may not know each other's PCI. Thus, the techniques described in Solution 1 and Solution 1.1 can also be applied to the public network/PNI-NPN network to avoid the effect of overlapping PCI between the SNPN and public network/PNI-NPN network.

### Examples on PCI range selection:

### Example 1:

Corresponding to Solution 1: The network may indicate the UE to report the membership information in the LoggedMeasurementConfiguration message (also known as loggedMeasConfig message in this patent document) as shown below. Then the UE can report the membership information to the network to indicate whether the detected PCI belongs to the RSNPN or selected SNPN network. For example, the LoggedMeasurementConfiguration message can include a memberShipRequired field.

### LoggedMeasurementConfiguration message

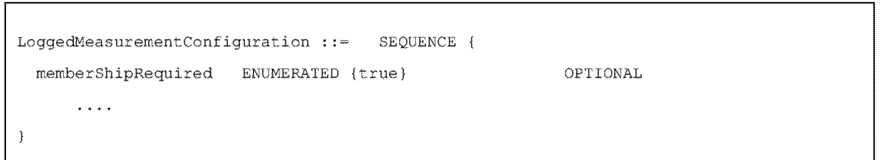

The information shown above in the LoggedMeasurementConfiguration can also be indicated in the broadcast system information (e.g., SIB1) as shown below. For example, a cell belong to a certain SNPNx network can broadcast the memberShipRequired indication in the system information, then all of the UE located in the broadcast range of this cell and registered in the SNPNx can log the membership information of the neighbor cells. A UE registered in the SNPNx is a member UE that can send measurement reports (e.g., MDT) to the network when the UE is in a connected state.

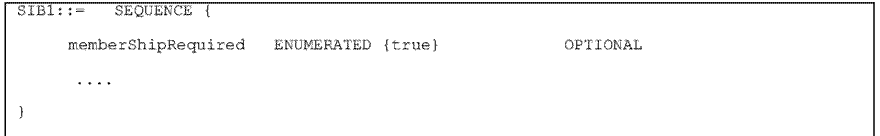

Upon receive this configuration, the UE can store the received membershipRequired configuration in the VarLogMeasConfig. The UE variable VarLogMeasConfig includes the configuration of the logging of measurements to be performed by the UE while in RRC_IDLE, RRC_INACTIVE

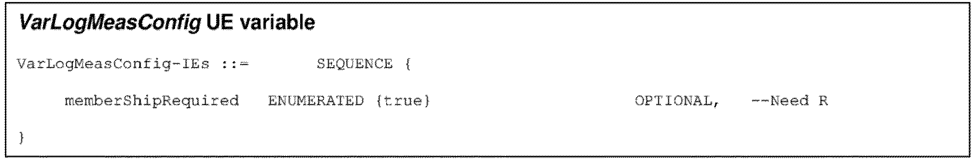

After the UE receives the LoggedMeasurementConfiguration, once the UE detect a cell with unmatched SNPN ID (e.g. RSNPN or a selected SNPN was not included in the system Information), the UE can log this information for reporting. The cell with an unmatched SNPN ID is a cell that is a non-member cell. The UE can log the non-member cell's cell information (e.g., the PCI of the cell, the measured quality result of the cell, the number of good SSBs, and membership information) by storing this information into the UE variable VarLogMeasReport which includes the logged measurements information.

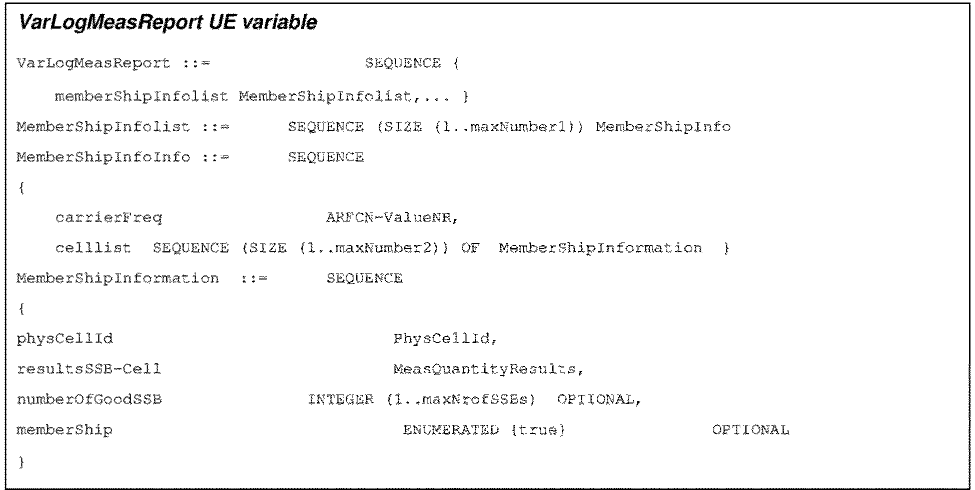

When the UE establish the connection or handover from another RAT, the UE can indicate the membership available information to the network through RRCResumeComplete/RRCSetupComplete/RestablishMentComplete/RRCReconfiguration Msg. An example of the RRCSetupComplete message is shown below:

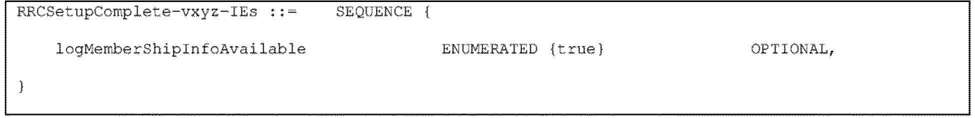

If the network includes the logMemberShipInfoReq in the UE information request message, the UE can include membership related information in the UEInformation Response message as in Solution 1.2

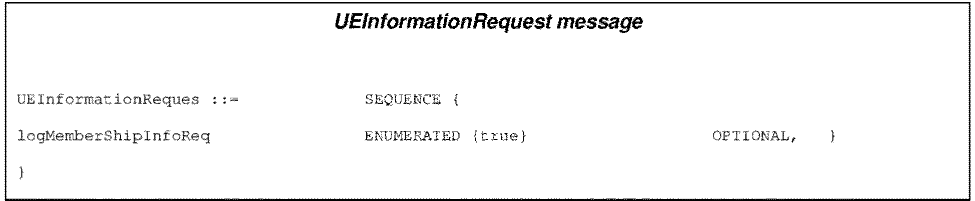

In the current scheme the logged MDT is configured per UE by dedicated signal, however for some cases (e.g., the cell wants all of the UE that have MDT capability to perform the MDT), the network can broadcast MDT configuration instead of the dedicated signaling (or dedicated configuration). In the system information, the network can also indicate different MDT configuration for different UE types (e.g. Capability reduced UE, such as industry sensors, wearable devices) The MDT configuration may include, for example, an indication (e.g., by including a memberShipRequired field) of whether the network wants the UE to provide membership information of the cells, as explained above in this patent document.

### Solution 1.2

The UE can indicate the membership information to the network as shown in the example UEInformationResponse message below. In UEInformationResponse message, memberShip Info list field may indicate the UE detected cell information, e.g., indicating the one or more cells that do not belong to the current network, and the memberShip field may be used to indicate whether the neighbor cell is member cell of the current network. The current network can be RSNPN or a selected SNPN, allowed CAG list and so on. If the memberShip field is absent from the UEInformationRespones message, it can mean that neighbor cell does not belong to the current network.

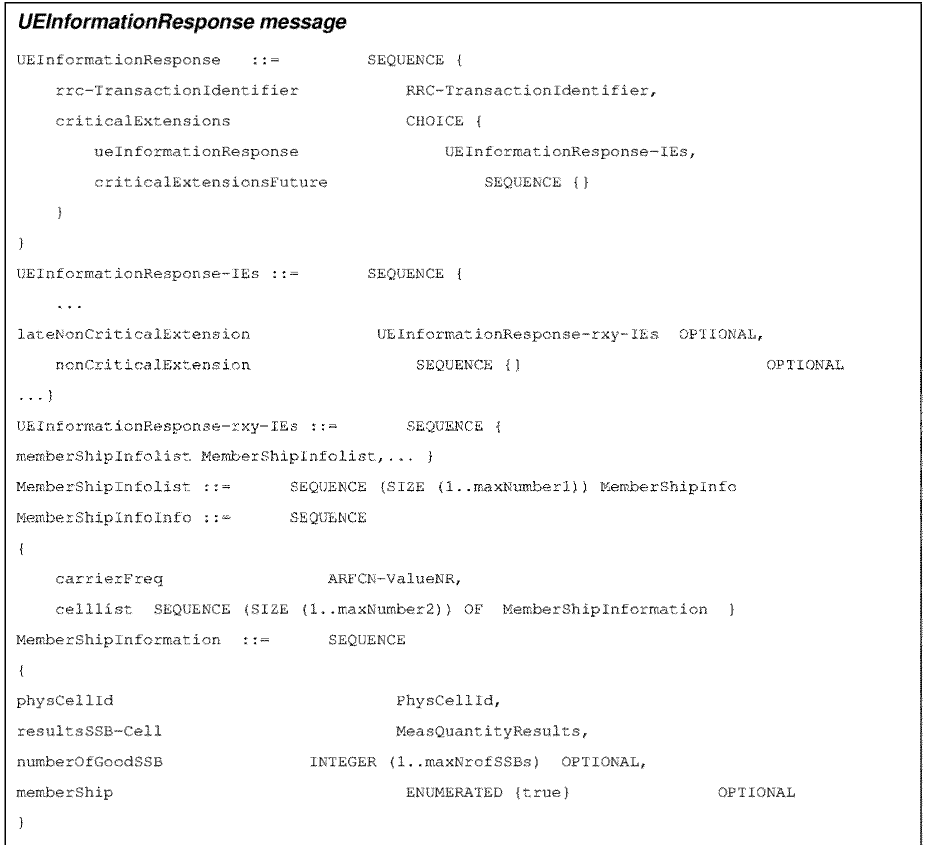

In some embodiments, the UE can indicate only the PCIs that are adopted by the other operators as shown in the example UEInformationResponse message below where the PCIInfoOfotherOperator indicates the PCIs that are used or adopted by the other operators:

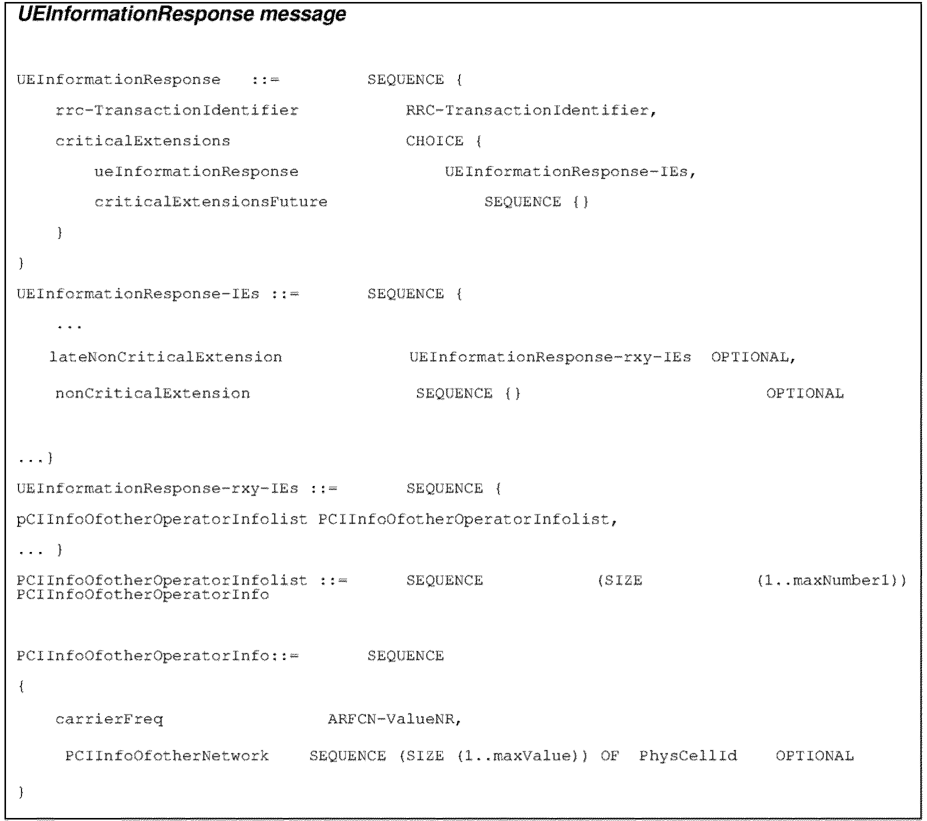

### Solution 1.3:

Corresponding to the solution 1.1: To avoid unnecessary reporting, the reserved PCI range for an area can be indicated in the loggedMeasConfig, e.g., PCI range per ARFCN, then at UE side, the UE can report the membership related information for the PCI that included in the corresponding PCI range. The frequency could be intra and/or inter frequency. For example, as shown below in LoggedMeasurementConfiguration message, the AreaConfigPCIRangeInfo field indicates that, for a certain frequency indicated by dl-CarrierFreq, the UE may report the cell information of the PCI of that cell that belongs to the PCI Range of the frequency indicated by dl-CarrierFreq.

### LoggedMeasurementConfiguration message

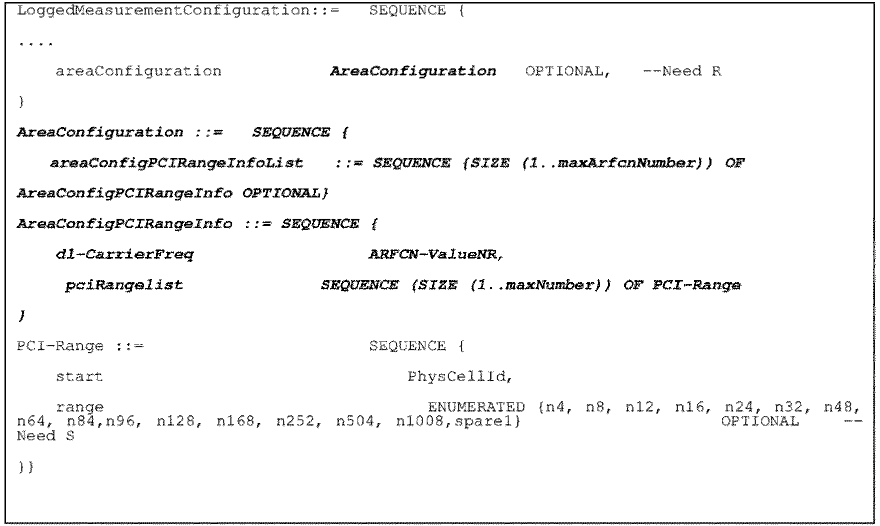

### II. Technical problem associated with area configuration for the NPN:

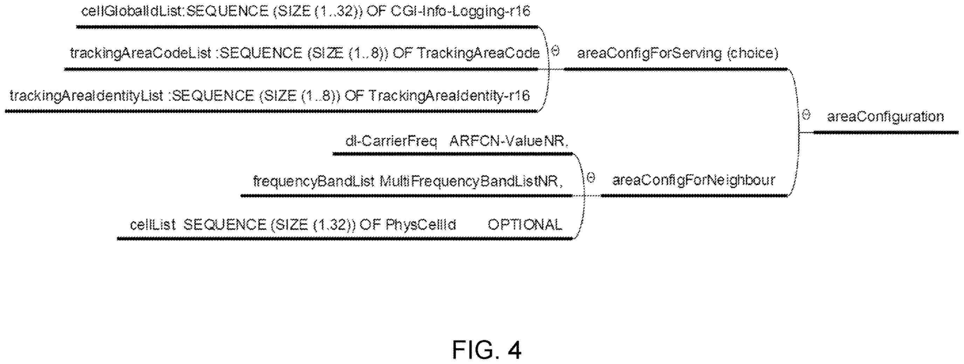

In MDT of the current public network, the network will configure one or more areas for the UE to perform the MDT, the UE will report the serving/neighbor cell information only when the UE is camping under the configured one or more areas. Currently the area configuration is structured as shown in FIG. 4.

The NPN related issues are not considered for the areaConfiguration shown in FIG. 4. And, the SNPN is not much different than the NPN at least because the SNPN ID can be indicated in the serving cell configuration (e.g., in the TrackingAreaIdentityList) and/or the SNPN ID can be included in the report message. For the CAG (i.e., PNI-NPN), for some cases the network may only want the CAG cell related information, but the current network cannot indicate such kinds of information. Thus, more detail granularity may be allowed when configuring the area for the NPN network. Besides, for a certain PLMN, there may be at least kinds of UEs: CAG only UE (for which the UE only camps on CAG) and the UE that camp on both CAG and PLMN.

### Technical solutions on area configuration for the NPN:

For the PLMN in which the UE can only camp on the CAG cell, the network can configure such type of UEs with all or part of the CAG list per PLMN so that this type of UEs can perform MDT on one or more CAG cells since this type of UE can only camp on CAG cells for the corresponding PLMN.

The network can configure the UE to perform MDT for all of the allowed CAG list implicitly. For example, if for a PLMN, the network does not indicate any CAG information, the CAG-only UE only takes the CAG cells that are included in the allowed CAG list (which is indicated by the upper (NAS) layer, it can be read from the SIM card, or indicated by the network through NAS message) into consideration for performing MDT. For example, as shown in Example 2 below, the cagareaConfigForServing field in the LoggedMeasurementConfiguration message can indicate the allowed CAG list for which UE is requested to perform measurement logging.

### Example 2:

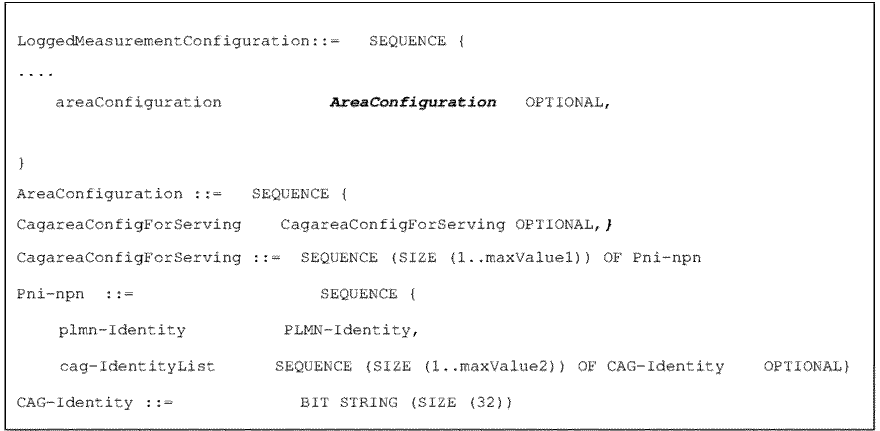

### Example 2.1

In some embodiments, the UE can also be configured to perform MDT for an area implicitly with an index using the following three example steps:
Step 1: The UE NAS indicate the allowed CAG list to the UE access stratum (AS) .
Step 2: The network indicates the CAGs of the serving area by an Index according to the allowed CAG list in the mobility Restriction info , the mobility restriction info is indicated by the CN
Step 3: The UE obtains the CAG IDs according to the allowed CAG list indicated by the UE NAS layer and Index so that the UE can determine the one or more CAGs/PLMN in which the UE is requested to perform measurement logging (e.g., MDT).

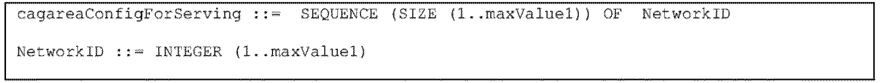

The network (or cell) can also combine with the existing areaConfigForServing as shown below together to configure the serving area:

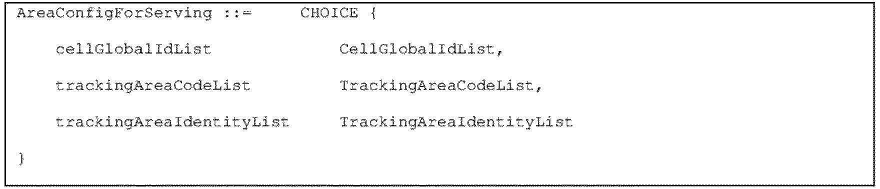

And for the SNPN, the SNPN ID = PLMN_ID + NID can be used to replace the PLMN ID in the existing areaConfigForServing as above.

The above information related to AreaConfigForServing can be indicated in a radio resource control (RRC) message, including dedicated RRC message or broadcast RRC message, sent by the cell to a UE.

For the PLMN that the UE support both the CAG and the PLMN, the UE can be configured as below: PLMN only; Allowed CAG list only; Part of the allowed CAG list; and All PLMN cells except part of the CAG cells.

### Example 3 - For UE type that can camp on both CAG and public networks:

A cell may send to the UE an example loggedmeasurementconfiguration message as shown below. The cagareaConfigForServing field indicates the CAG list for which UE is requested to perform measurement logging, the cagOnly field indicates that only the CAG cells that included in the cag-IdentityList were requested to perform measurement logging, and the cagExcept field indicates that all of the cells except those belong to the "cag-IdentityList " were requested to perform measurement logging.

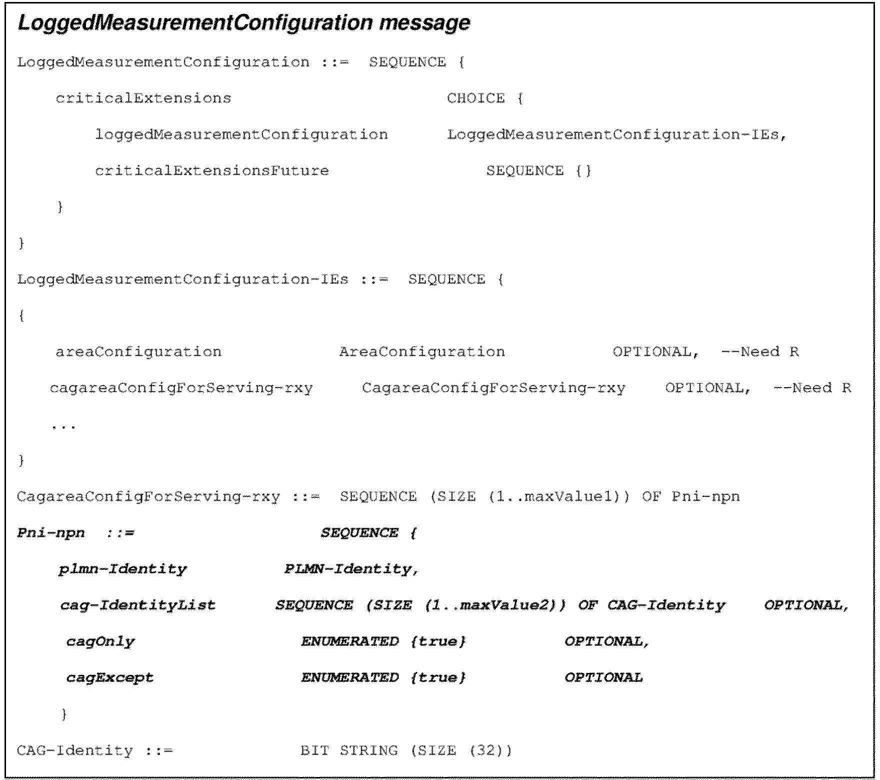

For the PLMN in which the UE support both the CAG and the PLMN, if the network want to indicate the whole PLMN, then the network can also set the cagareaConfigForServingrxy field as absent, then the UE refer to the legacy areConfigForserving.

If the Network want to configure allowed CAG list only, the network can indicate a CAG only Indication. If the Network want to configure the PLMN except some CAGs, the network can indicate an exceptCag indication.

### III. Technical problem description on out of service (OOS) /any cell selection state reporting:

In the current MDT, the UE only report the out of service (OOS) event/any cell selection state as below:

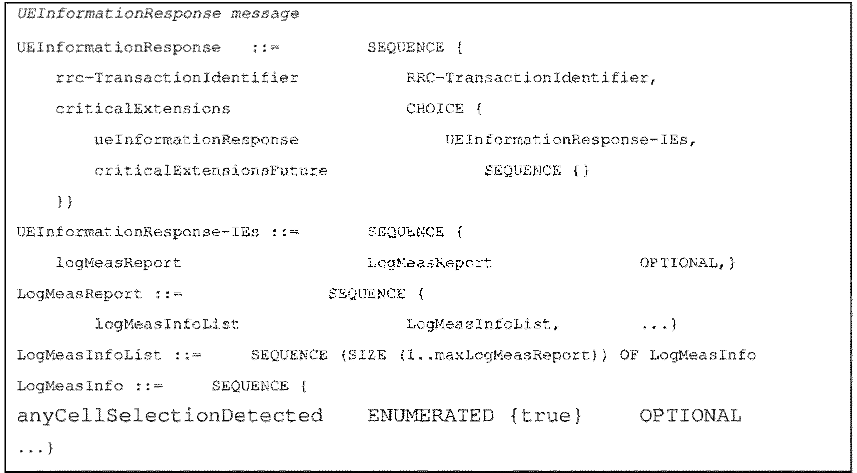

However, there are different reasons for the any cell selection state. For one scenario, if the UE determines that the strongest or highest ranked cells of all of the frequencies are not the suitable because they are associated with an unmatched network ID (i.e., a non-member cell), then the UE may bar all of the frequencies for, for example, five minutes according to the highest rank or best cell selection or reselection criterion. In another scenario, the any cell selection state may happen when the UE is out of the coverage. For these two different scenarios, if the UE indicates the same information to the network, the network cannot get the correct coverage information.

### Technical solutions for any cell selection state reporting:

In some embodiments, the any cell selection state event field can provide a detailed reason for the any cell selection state, e.g. bar or weak signal strength.

To provide more information, the UE can report the neighbor highest ranked or best cell information on each frequency. In some embodiments, when the UE was a barred on a certain frequency due to the "strongest/highest Ranked cells of all of the frequencies are not the suitable for the unmatched network ID", the UE can log this event and provide the Signal strength of strongest/highest Ranked cells. The UE may not enter into the any cell selection state if the UE determines that there are another cell on another frequency on which the UE can be camped.

### Examples on any cell selection state reporting:

### Example 4:

In some embodiments, the UE can indicate the detail any cell selection state cause as shown below, such as when the UE was barred and enter into any cell selection state due to the "strongest/highest Ranked cells of all of the frequencies are not the suitable for the unmatched network ID." In the example shown below, the Bar means the UE was barred and enter into any cell selection state due to the "strongest/highest Ranked cells of all of the frequencies are not the suitable for the unmatched network ID"; WeakSignal means the UE is out of coverage; and Other means the UE was barred for non-AS reason. The ueOOSCause can be included in the "LogMeasReport" of the UEInformationResponse message as mentioned above. The ueOOSCause can indicate the detailed cause that led the UE to enter into the any cell selection state

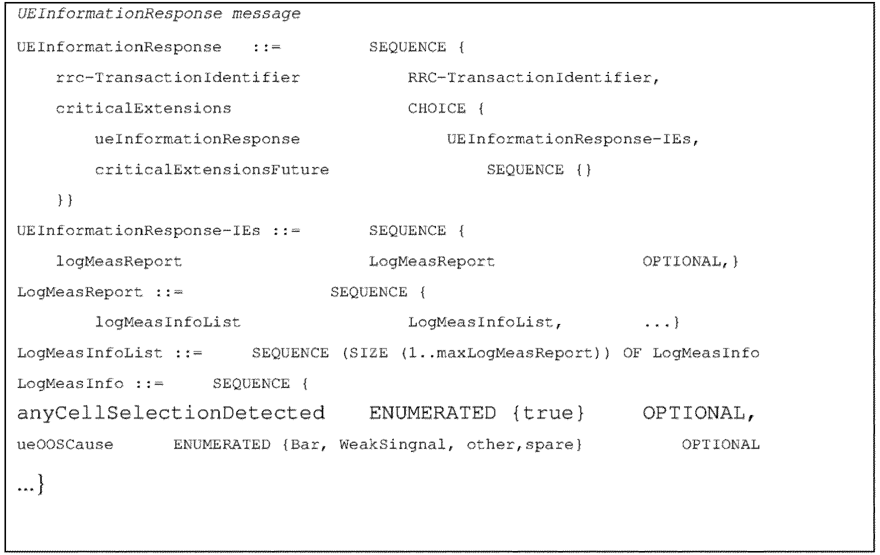

### Example 5: When one frequency was barred, the UE log the Signal strength of strongest/highest Ranked cells and the serving cell info.

### barringInfoReport:

When at least one frequency was barred due to due to the "strongest/highest Ranked cells of all of the frequencies are not the suitable for the unmatched network ID." the UE log the best/highest ranked cell information. It could be logged once one frequency was barred, or when the UE was barred on all of the frequencies. Meanwhile, the UE can also log the serving cell information before re-selection evaluation. The UE can include this logged information in the dedicated RRC signal, e.g. UEInformationResponse.

In the example barringinfoReport message shown below, anyCellSelectionDetected means the UE enter into the any Cells election state due to the "strongest/highest Ranked cells of all of the frequencies are not the suitable for the unmatched network ID; servingCellInfo: Indicate the serving cell info before the re-selection evaluation; and bestNeighborCellInfoList indicates the best/highest ranked cell information when one frequency was barred due to due to the " strongest/highest Ranked cells of all of the frequencies are not the suitable for the unmatched network ID." The ueOOSCause can indicate the detailed cause that led the UE to enter into the any cell selection state.

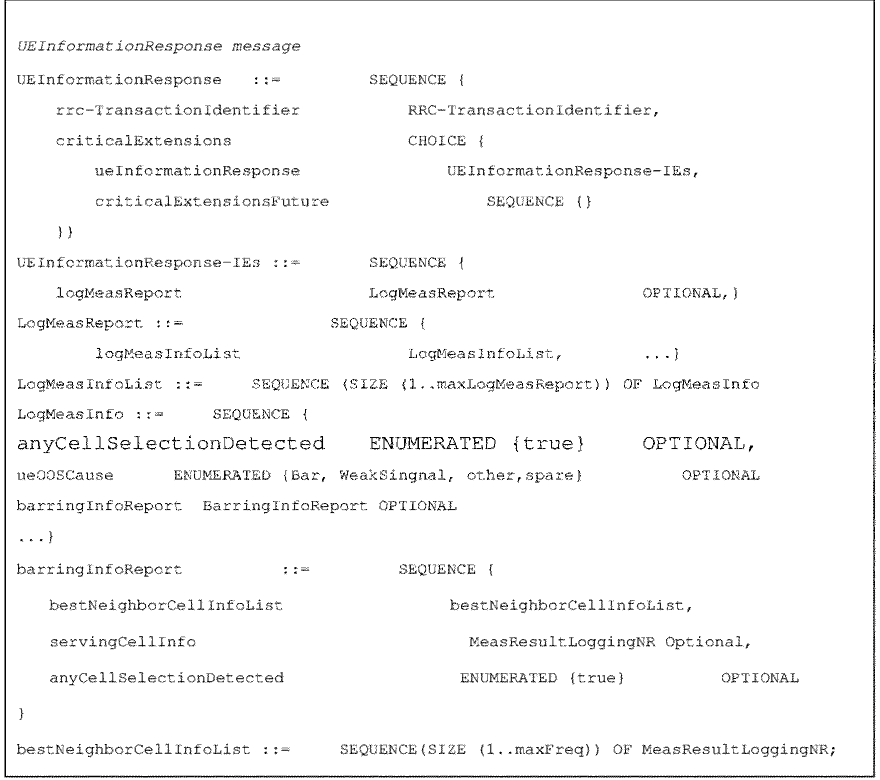

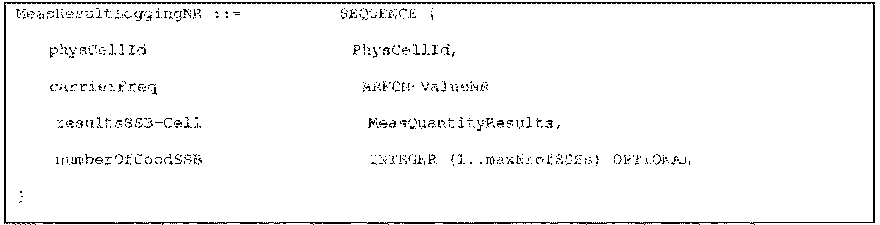

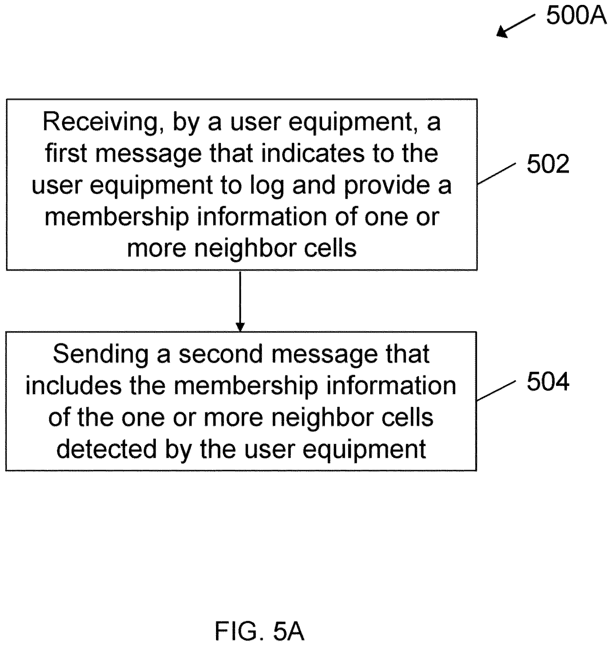

FIG. 5A shows an exemplary flowchart of a method 500A for providing membership information of network cells. Operation 502 includes receiving, by a user equipment, a first message that indicates to the user equipment to log and provide a membership information of one or more neighbor cells, where the user equipment is camped on a cell other than the one or more neighbor cells, where the membership information indicates whether a first set of network identifiers (IDs) of the one or more neighbor cells belongs to a second set of network IDs of a registered network or a selected network, and where the user equipment is configured to connect to the registered network or the selected network. Operation 504 includes sending a second message that includes the membership information of the one or more neighbor cells detected by the user equipment.

In some embodiments for method 500A, the membership information of the one or more neighbor cells is determined by the user equipment by comparing the second set of network IDs with the first set of network IDs broadcasted in a system information. In some embodiments for method 500A, the second set of network IDs are provided by an upper layer of the user equipment. In some embodiments for method 500A, the second set of network IDs include a stand-alone non-public network (SNPN) ID that equals to a public land mobile network (PLMN) plus a network ID. In some embodiments for method 500A, the second set of network IDs include a public land mobile network (PLMN) ID. In some embodiments for method 500A, the second set of network IDs include a public network integrated non-public network (PNI-NPN) ID that equals to the PLMN plus a closed access group (CAG) ID.

In some embodiments for method 500A, upon the receiving the first message, the method further comprises: storing, in a first local variable in the user equipment, a configuration that indicates that the membership information is requested; performing a logging operation after the membership information of the one or more neighbor cells are obtained, where the logging operation includes storing the membership information in a second local variable in the user equipment; sending a third message that indicates that the membership information is available; and where the second message is sent in response to receiving a fourth message by the user equipment that triggers the user equipment to report the membership information. In some embodiments for method 500A, the third message includes a radio resource control (RRC) reconfiguration complete message, a RRC setup complete message, a RRC resume complete message, or a RRC re-establishment complete message.

In some embodiments for method 500A, the membership information in the second message includes a physical cell identifier (PCI) of the at least one neighbor cell, a measurement quality result of the at least one neighbor cell, a number of synchronization signal blocks (SSB) received from the at least one neighbor cell, or the membership indicator of the at least one neighbor cell. In some embodiments for method 500A, the second message includes a physical cell identifier (PCI) of the at least one neighbor cell. In some embodiments for method 500A, the first message includes one or more physical cell identifier (PCI) ranges, and the second message includes the membership information of the one or more neighbor cells having one or more frequencies that are within the one or more PCI ranges. In some embodiments for method 500A, each of the one or more PCI ranges is associated with an absolute radio frequency channel number (ARFCN). In some embodiments for method 500A, each of the one or more PCI ranges is associated with a first set of one or more frequencies.

In some embodiments for method 500A, the first set of one or more frequencies includes any one or more of an infra frequency and an inter frequency. In some embodiments for method 500A, the first message is included in a system information block (SIB) or a dedicated radio resource control (RRC) message.

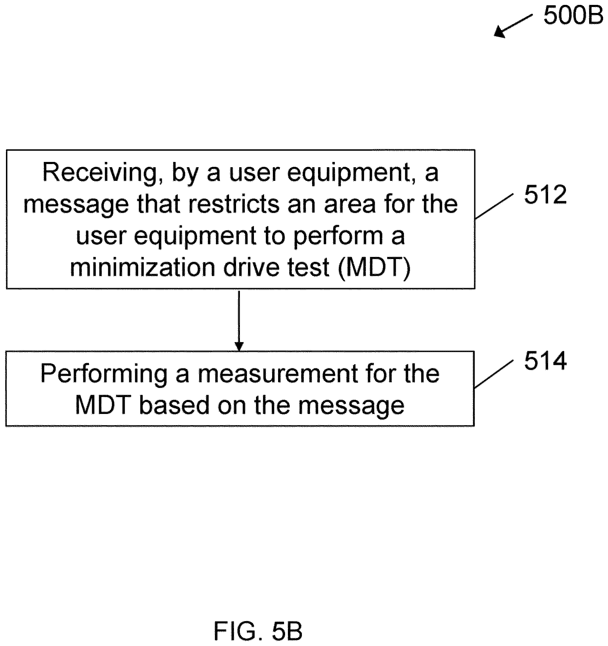

FIG. 5B shows an exemplary flowchart of a method 500B for performing a minimization of drive test (MDT). Operation 512 includes receiving, by a user equipment, a message that restricts an area for the user equipment to perform a minimization drive test (MDT), where the user equipment is configured to operated on a non-public network (NPN), and where the message includes: one or more stand-alone non-public network (SNPN) identifiers that equal to a public land mobile network (PLMN) identifier plus a network identifier, a closed access group (CAG) list which includes one or more PLMN identifiers associated with the CAG list, a CAG only indicator that indicates that the user equipment is requested to perform the MDT for only a set of CAGs identified by the CAG list, and a CAG except indicator that indicates that the user equipment is requested to perform the MDT for all cells including public cells and CAG cells except the set of CAG cells identified by the CAG list. Operation 514 includes performing a measurement for the MDT based on the message.

In some embodiments for method 500B, the user equipment is registered under a SNPN network or the user equipment is registered under a PNI-NPN network. In some embodiments for method 500B, for a PLMN and for the user equipment registered under the PNI-NPN network: the user equipment belongs to a first type of PNI-NPN user equipment in which the user equipment is only allowed to camp under a CAG cell, or the user equipment belongs to a second type of PNI-NPN user equipment in which the user equipment is allowed to camp under the CAG cell and a public cell. In some embodiments for method 500B, the one or more SNPN identifiers are used by the user equipment registered under a SNPN network to restrict the area in which the UE performs the measurement for the MDT. In some embodiments for method 500B, where the CAG list, the CAG only indicator, or the CAG except indicator is used by the user equipment registered under a PNI-NPN network to restrict the area in which the UE performs the measurement for the MDT.

In some embodiments for method 500B, the user equipment belongs to a first type of PNI-NPN user equipment in which the user equipment is only allowed to camp under a CAG cell, and for a PLMN and for the first type of PNI-NPN UE, the UE performs the measurement for the MDT only in one or more cells broadcasting one of CAG ID that included in the CAG list. In some embodiments for method 500B, the user equipment belongs to a second type of PNI-NPN user equipment in which the user equipment is allowed to camp under the CAG cell and a public cell, and, for a PLMN, for the second type of PNI-NPN UE, the CAG only indicator indicate that the UE is to perform the measurement for the MDT only in the one or more cells broadcasting one of CAG ID that included in the CAG list.

In some embodiments, the method 500B further comprises, upon determining that the CAG only indication is absent for the PLMN and for the second type of PNI-NPN UE, the UE performs the measurement for the MDT in the one or more cells broadcasting one of CAG ID that included in the CAG list and the public cells under the PLMN. In some embodiments for method 500B, the user equipment belongs to a second type of PNI-NPN user equipment in which the user equipment is allowed to camp under the CAG cell and a public cell, and for a PLMN and for the second type of PNI-NPN UE, the CAG except indicator indicates that the UE is to perform the measurement for the MDT for all cells including public cells and CAG cells except the set of CAG cells identified by the CAG list. In some embodiments for method 500B, the user equipment belongs to a first type of PNI-NPN user equipment in which the user equipment is only allowed to camp under a CAG cell, and for a PLMN and for the first type of PNI-NPN UE, the CAG except indicator indicates that the UE is to perform the measurement for the MDT for all cells including in the allowed CAG cells configured by the upper layer except the set of CAG cells identified by the CAG list.

In some embodiments for method 500B, the message includes a cell global identifier list, a tracking area code list, and a tracking area identity list. In some embodiments for method 500B, the message is received via a dedicated radio resource control (RRC) signal or a broadcast RRC signal.

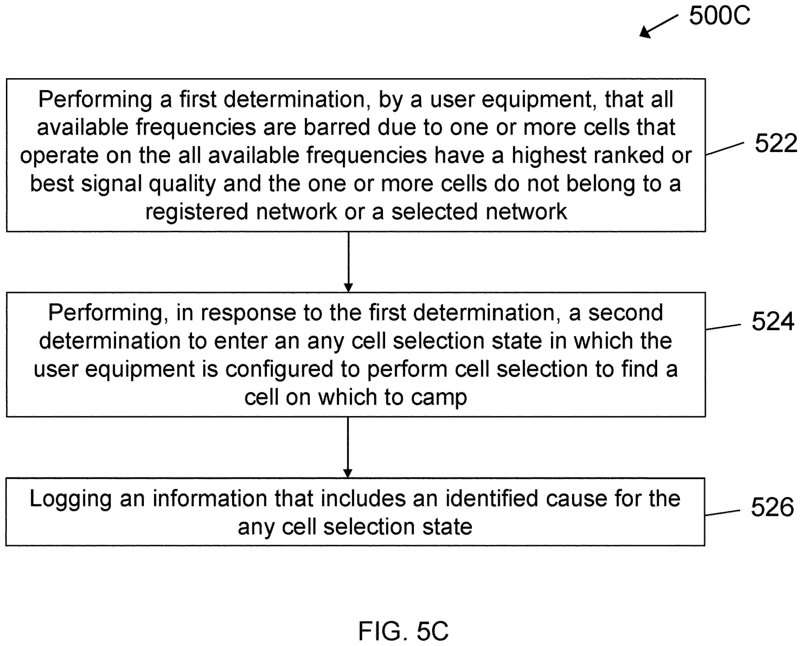

FIG. 5C shows an exemplary flowchart of a method 500C for identifying a cause for an any cell selection state. Operation 522 includes performing a first determination, by a user equipment, that all available frequencies are barred due to one or more cells that operate on the all available frequencies have a highest ranked or best signal quality and the one or more cells do not belong to a registered network or a selected network. Operation 524 includes performing, in response to the first determination, a second determination to enter an any cell selection state in which the user equipment is configured to perform cell selection to find a cell on which to camp. Operation 526 includes logging (e.g., storing or sending) an information that includes an identified cause for the any cell selection state. In some embodiments for method 500C, the identified cause for the any cell selection state indicates a bar cause that indicates that the user equipment has entered in the any cell selection state in which the user equipment is barred from accessing the available frequencies. In some embodiments for method 500C, the identified cause for the any cell selection state indicates a weak signal that indicates that the user equipment is out of coverage. In some embodiments for method 500C, the identified cause for the any cell selection state indicates that the user equipment is barred from accessing the frequencies for a non-access stratum reason.

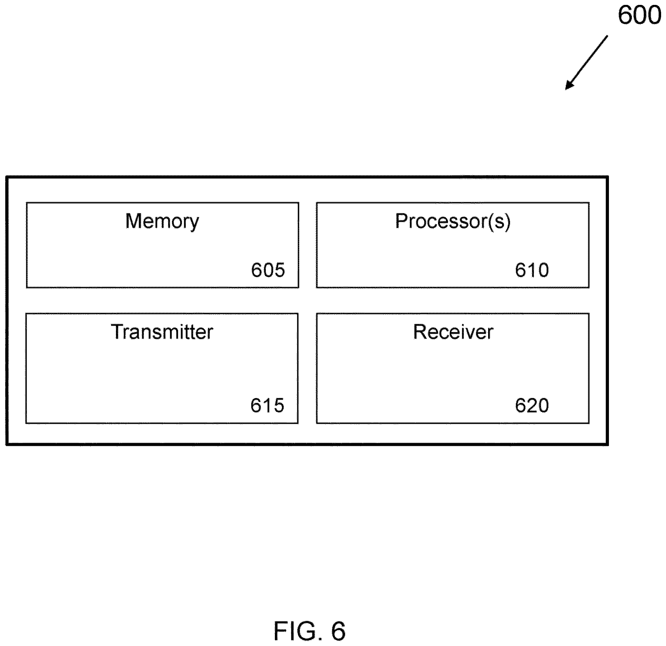

FIG. 6 shows an exemplary block diagram of a hardware platform 600 that may be a part of a network node (e.g., cell or network) or a user equipment. The hardware platform 600 includes at least one processor 610 and a memory 605 having instructions stored thereupon. The instructions upon execution by the processor 610 configure the hardware platform 600 to perform the operations described in FIGS. 1 to 5C and in the various embodiments described in this patent document. The transmitter 615 transmits or sends information or data to another node. For example, a network node transmitter can send a SIB message to a user equipment. The receiver 620 receives information or data transmitted or sent by another node. For example, a user equipment can receive a LoggedMeasurementConfiguration message from a network node.

In this document the term "exemplary" is used to mean "an example of" and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

## Claims

1. A wireless communication method, comprising:
receiving, by a user equipment, a message that restricts an area for the user equipment to perform a minimization drive test, MDT,
wherein the user equipment is configured to operate on a non-public network, NPN, and
wherein the message includes:
one or more stand-alone non-public network, SNPN, identifiers that equal to a public land mobile network, PLMN, identifier plus a network identifier, or
a closed access group, CAG, list which includes one or more PLMN identifiers associated with the CAG list; and
performing a measurement for the MDT based on the message.

2. The method of claim 1, wherein the user equipment is registered under a SNPN network or the user equipment is registered under a PNI-NPN network.

3. The method of claim 1, wherein the one or more SNPN identifiers are used by the user equipment registered under a SNPN network to restrict the area in which the user equipment performs the measurement for the MDT.

4. The method of claim 1, wherein the CAG list is used by the user equipment registered under a PNI-NPN network to restrict the area in which the user equipment performs the measurement for the MDT.

5. The method of claim 1, wherein the message includes a cell global identifier list, a tracking area code list, and a tracking area identity list.

6. The method of claim 1, wherein the message is received via a dedicated radio resource control, RRC, signal.

7. An apparatus for wireless communication comprising a processor, configured to implement a method recited in one or more of claims 1 to 6.

8. A non-transitory computer readable program storage medium having code stored thereon, the code, when executed by a processor, causing the processor to implement a method recited in one or more of claims 1 to 6.

## Patentansprüche

1. Drahtloses Kommunikationsverfahren, das aufweist:
Empfangen, durch ein Benutzergerät, einer Nachricht, die einen Bereich für das Benutzergerät einschränkt, einen Minimization Drive Test, MDT, durchzuführen,
wobei das Benutzergerät konfiguriert ist, in einem nicht-öffentlichen Netzwerk, NPN, zu arbeiten, und
wobei die Nachricht enthält:
eine oder mehrere Kennungen eigenständiger nicht-öffentlicher Netzwerke, SNPN, die einer Kennung eines terrestrischen öffentlichen Mobilfunknetzes, PLMN, plus einer Netzwerkkennung entsprechen, oder
eine Liste für eine geschlossene Zugangsgruppe, CAG, die eine oder mehrere PLMN-Kennungen enthält, die mit der CAG-Liste verbunden sind; und
Durchführen einer Messung für den MDT basierend auf der Nachricht.

2. Verfahren nach Anspruch 1, wobei das Benutzergerät in einem SNPN-Netzwerk oder in einem PNI-NPN-Netzwerk registriert ist.

3. Verfahren nach Anspruch 1, wobei die eine oder mehreren SNPN-Kennungen von dem in einem SNPN-Netzwerk registrierten Benutzergerät verwendet werden, um das Gebiet einzuschränken, in dem das Benutzergerät die Messung für das MDT durchführt.

4. Verfahren nach Anspruch 1, wobei die CAG-Liste von dem in einem PNI-NPN-Netzwerk registrierten Benutzergerät verwendet wird, um das Gebiet einzuschränken, in dem das Benutzergerät die Messung für das MDT durchführt.

5. Verfahren nach Anspruch 1, wobei die Nachricht eine Liste globaler Zellkennungen, eine Liste von Verfolgungsgebietscodes und eine Liste von Verfolgungsgebietsidentitäten enthält.

6. Verfahren nach Anspruch 1, wobei die Nachricht über ein dediziertes Funkressourcensteuerung, RRC, Signal empfangen wird.

7. Vorrichtung zur drahtlosen Kommunikation, die einen Prozessor aufweist, der konfiguriert ist, ein Verfahren nach einem oder mehreren der Ansprüche 1 bis 6 zu implementieren.

8. Nichtflüchtiges, computerlesbares Programmspeichermedium mit darauf gespeichertem Code, wobei der Code, wenn er von einem Prozessor ausgeführt wird, den Prozessor veranlasst, ein Verfahren nach einem oder mehreren der Ansprüche 1 bis 6 zu implementieren.

## Revendications

1. Procédé de communication sans fil, comprenant :
la réception, par un équipement utilisateur, d'un message qui restreint une zone dans laquelle l'équipement utilisateur peut effectuer une minimisation d'essai en mouvement (MDT),
dans lequel l'équipement utilisateur est configuré pour fonctionner sur un réseau non public, NPN, et
dans lequel le message comprend :
un ou plusieurs identificateurs de réseau non public autonome (SNPN) équivalant à un identificateur de réseau mobile terrestre public (PLMN) plus un identificateur de réseau, ou
une liste de groupes d'accès fermés (CAG) comprenant un ou plusieurs identificateurs PLMN associés à la liste CAG ; et
la prise d'une mesure pour la MDT sur la base du message.

2. Procédé de la revendication 1, dans lequel l'équipement utilisateur est enregistré sous un réseau SNPN ou sous un réseau PNI-NPN.

3. Procédé de la revendication 1, dans lequel un ou plusieurs identificateurs SNPN sont utilisés par l'équipement utilisateur enregistré sous un réseau SNPN pour restreindre la zone dans laquelle l'équipement utilisateur effectue la mesure pour la MDT.

4. Procédé de la revendication 1, dans lequel la liste CAG est utilisée par l'équipement utilisateur enregistré sous un réseau PNI-NPN pour restreindre la zone dans laquelle l'équipement utilisateur effectue la mesure pour la MDT.

5. Procédé de la revendication 1, dans lequel le message comprend une liste d'identifiants globaux de cellules, une liste de codes de zones de suivi et une liste d'identités de zones de suivi.

6. Procédé de la revendication 1, dans lequel le message est reçu par l'intermédiaire d'un signal de contrôle des ressources radio (RRC) dédié.

7. Appareil de communication sans fil comprenant un processeur, configuré pour mettre en oeuvre un procédé récité dans une ou plusieurs des revendications 1 à 6.

8. Support de stockage de programme lisible par ordinateur non transitoire sur lequel est stocké un code qui, lorsqu'il est exécuté par un processeur, permet à ce dernier de mettre en oeuvre un procédé décrit dans l'une ou plusieurs des revendications 1 à 6.
